# EUROPEAN PATENT APPLICATION

(11) **EP 2 636 995 A1**
(43) Date of publication of application: **11.09.2013**
(21) Application number: 10859259.3
(22) Date of filing: 04.11.2010
(51) Int. Cl.: G01C 21/00, G08G 1/137

(54) **INFORMATION PROVIDING DEVICE**

(71) Applicant: Toyota Jidosha Kabushiki Kaisha, Toyota-shi, Aichi 471-8571 (JP)
(72) Inventor: HAYASHIDA Teruhide, Toyota-shi, Aichi 471-8571 (JP)
(74) Representative: Albutt, Anthony John
(86) International application number: PCT/JP2010/069604
(87) International publication number: WO 2012/060002

(57) **Abstract**

The present invention is an information providing device 1 which includes a vehicle side terminal 3, a communication center device 2 that searches for a basic route R by communication with the vehicle side terminal 3, and an information providing unit 13 that provides information on the basic route R to a driver, the communication center device 2 includes a travel direction change point determination unit 7 that determines a travel direction change point P at which the vehicle M changes a travel direction in the basic route R, and a deviation route search unit 8 that searches for a deviation route, based on the travel direction change point P, and the information providing unit 13 provides information on the deviation route to the driver in a case where the vehicle M travels along the deviation route.

## Description

### Technical Field

The present invention relates to an information providing device which provides information on a route to a destination to a driver.

### Background Art

In the related art, a car navigation assistance system is known which informs a user of a course to a destination by communication between a centralized server in which traffic information is collected and a mobile terminal (for example, refer to Patent Literature 1). In a navigation assistance system disclosed in Patent Literature 1, a course inquiry from a mobile terminal is transmitted to the centralized server through a wireless circuit, and the calculation of the course is performed in the centralized server. Then, the user is informed of the course by transmitting the course that is calculated in the centralized server to the mobile terminal.

The navigation assistance system also calculates another course in a zone adjacent to the calculated course, and transmits initial course data along with the other course data to the mobile terminal. For this reason, even in a case where the user deviates by mistake from the initial course, the mobile terminal can inform the user of another course.

### Citation List

### Patent Literature

[Patent Literature 1] PCT Japanese Translation Patent Publication No. 2001-519029

### Summary of Invention

### Technical Problem

However, in the aforementioned system of the related art, it is necessary to calculate other course data with respect to all intersections and forks in roads that are included in the course, so that a calculation time is increased in places like urban places where there are a lot of intersections. Further, there are problems in that communication time is also increased due to an increase of communication amount to be transmitted from the centralized server to the mobile terminal, and a waiting time from when a question is made until when a course is transmitted is extended.

Therefore, an object of the present invention is to provide an information providing device capable of shortening a waiting time of a driver.

### Solution to Problem

To solve the above problems, according to the present invention, there is provided an information providing device which includes a mobile object terminal installed in a mobile object, a communication center device that searches for a basic route from a current position of the mobile object to a destination by communication with the mobile object terminal, and an information providing unit that provides information on the basic route to a driver of the mobile object, the communication center device includes, a travel direction change point determination unit that determines a travel direction change point at which the mobile object changes a travel direction in the basic route, and a deviation route search unit that searches for a deviation route that is set assuming a case where the mobile object deviates from the basic route, based on the travel direction change point, and the information providing unit provides information on the deviation route to the driver in a case where the mobile object travels along the deviation route.

According to the information providing device relating to the present invention, since assuming a case where the mobile object deviates from the basic route, the deviation route is searched for in advance, it is possible to provide information on the deviation route in a short time even in a case where the driver deviates from the basic route by mistake and to shorten the waiting time for re-routing. Further, in the information providing device, since the driver is likely to take an incorrect route in the vicinity of the travel direction change point such as an intersection and a fork in the road in which the travel direction needs to be changed in the basic route, the information providing device searches for the deviation route based on the travel direction change point, thereby avoiding searching for an extra deviation route. Therefore, according to the information providing device, it is possible to efficiently search for the deviation route, thus a reduction in communication time is achieved due to a reduction of search time and a decrease in the communication amount, and thus it is possible to shorten the waiting time of the driver.

In the information providing device relating to the present invention, it is preferable that the deviation route search unit search for as a deviation route, at least any one of a straight on deviation route that is set assuming a case where the mobile object travels straight on at the travel direction change point and a previous deviation route that is set assuming a case where the mobile object deviates from the basic route at an immediately previous intersection or fork to the travel direction change point.
According to the information providing device relating to the present invention, since a situation where the driver deviates from the basic route is likely to happen in a case where the driver travels straight on without changing the travel direction at the travel direction change point or in a case where the driver changes the travel direction at an immediately previous intersection or fork to the travel direction change point, the information providing device in advance searches for the straight on deviation route and the previous deviation route, thereby suppressing a search time from being extended and shortening a waiting time for re-routing.

In the information providing device relating to the present invention, it is preferable that the mobile object terminal have a terminal side search unit which searches for a route from a current position of the mobile object to a destination, in a case where the mobile object deviates from any one of the basic route and the deviation route, and in a case where the terminal side search unit searches for a route, the information providing unit provide information on the route to the driver.
According to the information providing device relating to the present invention, since the mobile object terminal searches for a route in a case where the mobile object deviates from any one of the basic route and the deviation route, it takes a shorter communication time compared to a case where a communication center device re-searches, and thus it is possible to provide information on a route to the driver in a short time, and to shorten a waiting time for re-routing.

In the information providing device relating to the present invention, it is preferable that the communication center device re-search for a basic route from the current position of the mobile object to the destination by communication with the mobile object terminal, in a case where the mobile object deviates from any one of the basic route and the deviation route, and in a case where the communication center device completes re-searching, in a route that the terminal side search unit searches for, the information providing unit replace a part that is different from the basic route that the communication center device re-searches for with the basic route, and provide information on a replaced route to the driver.
According to the information providing device relating to the present invention, information on the basic route of the communication center device that is searched for more accurately carried out than the search by the mobile object terminal, is preferentially provided, and thus the accuracy of the re-searched route can be improved.

In the information providing device relating to the present invention, it is preferable that in the case where the communication center device completes re-searching, in the route that the terminal side search unit searches for, the information providing unit replace a part for which no information has yet been provided and different from the basic route that the communication center device re-searches for with the basic route, and provide information on a replaced route to the driver.
The information providing device relating to the present invention, in the route that the mobile terminal searches for, replaces a part that is not yet information provided and different from the basic route that the communication center device re-searches for with the basic route, without changing a part for which information has already been provided to the driver. Therefore, since the driver does not recognize the route replacement, it is possible to prevent the driver's attention from being diverted or from resulting in a loss of trust of the driver due to a sudden change in the route for which information has already been provided in advance.

In the information providing device relating to the present invention, it is preferable that the information providing unit include a display that provides information to an occupant of the mobile object.
According to the information providing device relating to the present invention, it is possible to visually provide easily understandable information through the display to the occupant of the mobile object including the driver.

### Advantageous Effects of Invention

According to the present invention, it is possible to shorten a waiting time of a driver.

### Brief Description of Drawings

Fig. 1 is a block diagram illustrating an embodiment of an information providing device relating to the present invention.
Fig. 2 is a diagram illustrating a case where a vehicle deviates from a basic route and travels along a deviation route.
Fig. 3 is a plan view illustrating a case where a vehicle deviates from the basic route and travels along the deviation route.
Fig. 4 is a diagram illustrating a case where a vehicle deviates from the basic route and the deviation route.
Fig. 5 is a plan view illustrating a case where a vehicle deviates from the basic route and the deviation route.
Fig. 6 is a schematic diagram illustrating a deviation route search by a communication center device in an information providing device in the related art.
Fig. 7 is a schematic diagram illustrating a deviation route search by a communication center device in an information providing device relating to the embodiment.
Fig. 8 is a flow chart illustrating a sequence of a process in the information providing device.
Fig. 9 is a flow chart illustrating a sequence in a re-search process shown in Fig. 8.

### Description of Embodiments

Hereinafter, the preferred embodiment of the present invention will be described in detail referring to drawings. Further, the same part or the corresponding part in each drawing is denoted by the same reference numeral, so that repeated description thereof will be omitted.

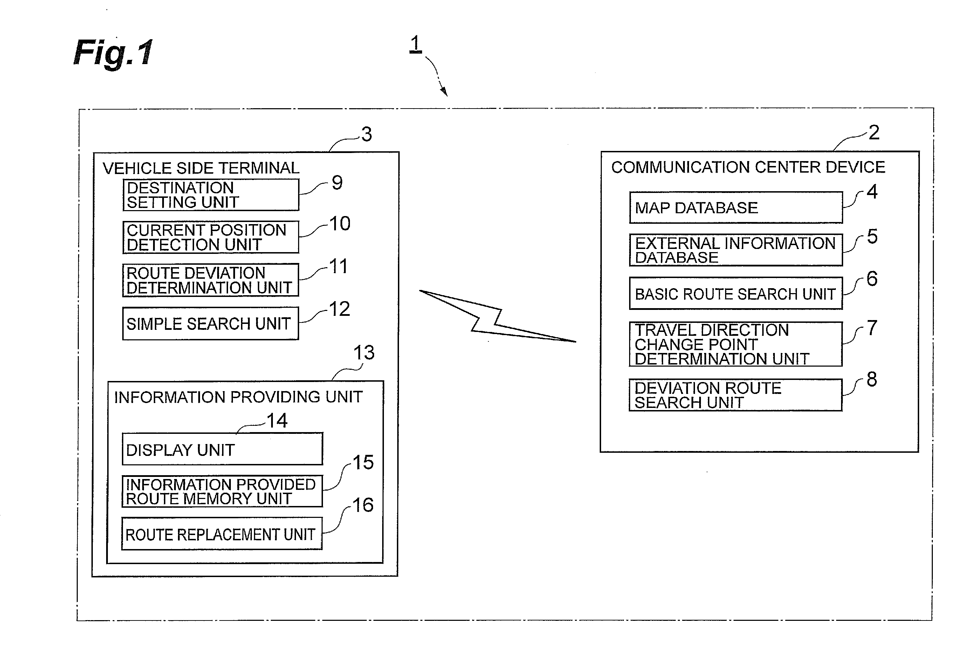

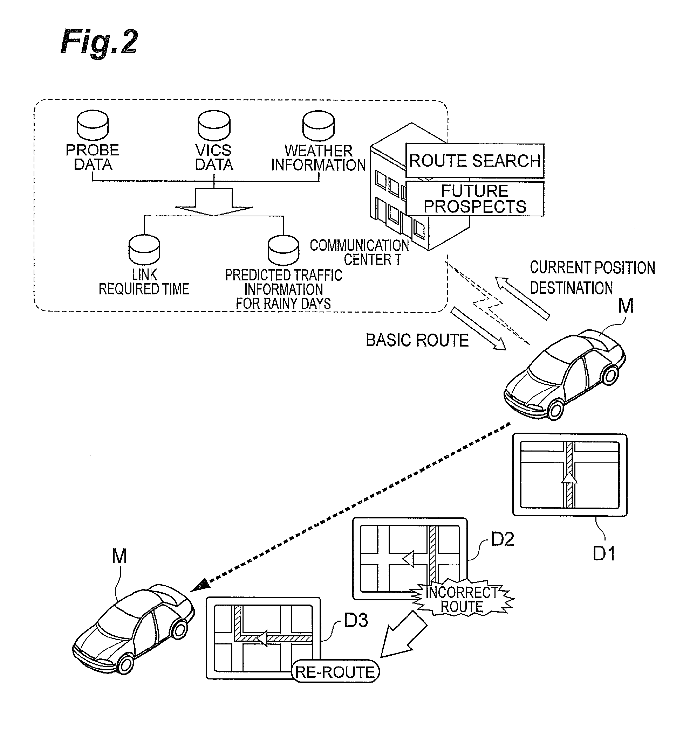

As shown in Figs. 1 and 2, an information providing device 1 relating to the present embodiment provides a driver with information on a route from a current position of a vehicle M to a destination using a wireless communication line between a communication center T in which traffic information is collected and the vehicle M. The information providing device 1 includes a communication center device 2 installed in the communication center T and a vehicle side terminal 3 installed in the vehicle M.

The vehicle side terminal 3 is, for example, a car navigation system provided in the vehicle M. The vehicle side terminal 3 functions as a mobile object terminal described in appended claims. Further, a portable terminal such as a smart phone can be used as the vehicle side terminal 3. In this case, for example, a route is searched for by taking the current position of the portable terminal as the current position of the vehicle M, and information on the route is provided to the driver through the display unit of the portable terminal. Further, the portable terminal may perform a calculation and then the calculation result of the portable terminal may be displayed on the display fixed in the vehicle.

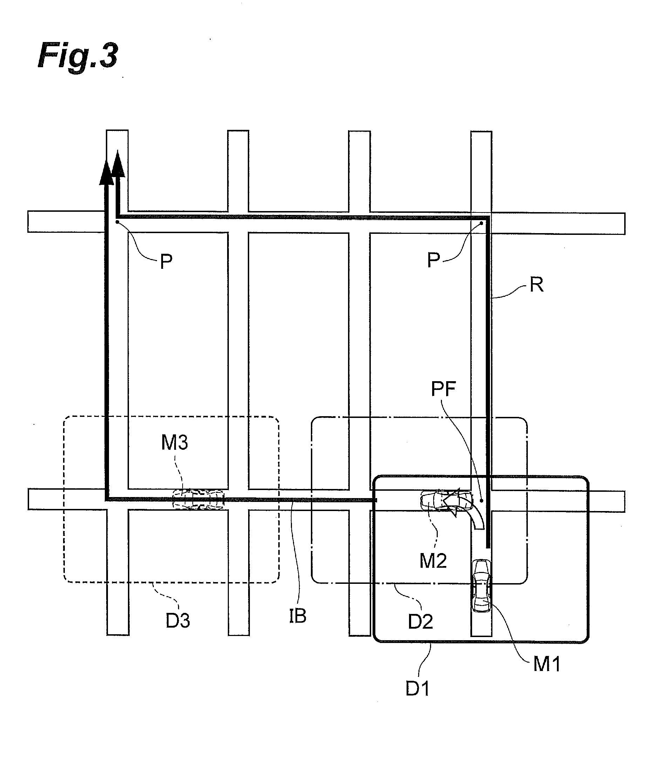

As shown in Figs. 2 and 3, in the information providing device 1, if the driver inputs a destination in the vehicle side terminal 3, the communication center device 2 searches for a basic route R from a current position of a vehicle M to the destination. The basic route R is an optimum route satisfying a driver's request, for example, a route that reaches the destination in a minimum time. Subsequently, the information providing device 1 determines a travel direction change point P at which the vehicle M changes a travel direction in the basic route R. The travel direction change point P includes, out of intersections and forks in roads in the basic route R, intersections at which the vehicle performs right turns or left turns or forks in roads at which the vehicle moves to other roads. In addition, the travel direction change point P does not include intersections at which the vehicle M on the basic route R travels straight on or forks in roads at which the vehicle M travels along the same road without moving to other roads.

The information providing device 1 searches for a deviation route that is set assuming a case where the driver deviates from the basic route by mistake in the communication center device 2. The information providing device 1 searches for the deviation route based on the travel direction change point. The deviation route refers to a route to reach the destination or the basic route R in a case where the vehicle M deviates from the basic route R. The information providing device 1 searches for two kinds of deviation routes, that is, a straight on deviation route IA and a previous deviation route IB. The straight on deviation route IA refers to a route to reach the destination or the basic route R in a case where the driver incorrectly travels straight on at the travel direction change point P. Further, the previous deviation route IB is a route to reach the destination or the basic route R in a case where the driver deviates from the basic route R by mistake at an immediately previous intersection or fork to the travel direction change point P.

Here, a description of a case where the vehicle M deviates from the basic route R will be made referring to Figs. 2 and 3. M1 to M3 shown in Fig. 3 denotes the position of the vehicle M. M1 is the position of the vehicle M that travels on the basic route R. M2 is the position of the vehicle M that deviates from the basic route R at an immediately previous intersection PF to the travel direction change point P in the basic route R. M3 is the position of the vehicle M that deviates from the basic route R and travels on the previous deviation route IB. Further, D 1 to D3 shown in Fig. 2 and Fig. 3 respectively correspond to M1 to M3, and show respective screens on the display of the vehicle side terminal 3 in M1 to M3.

In this case, the information providing device 1 in advance searches for the previous deviation route IB to reach the destination in the communication center device 2 in a case where the vehicle deviates from the basic route R at an immediately previous intersection PF to the travel direction change point P, thereby switching the screen of the display into the screen of the previous deviation route IB in a short time and shortening the waiting time of the driver, even in a case where the vehicle deviates from the basic route R by mistake at the intersection PF like M2.

Further, the information providing device 1 performs a simple search in the vehicle side terminal 3 in a case where the vehicle M deviates from any one of the basic route R, the straight on deviation route IA, and the previous deviation route IB. The information providing device 1 searches for a new basic route in the communication center device 2, along with the simple search of the vehicle side terminal 3. The information providing device 1 provides information on the simple search route IC that is obtained by the simple search, to the driver. The information providing device 1 preferentially provides information on the new basic route Rr that the communication center device 2 searches for to the driver, in a case where the communication center device 2 completes searching. At this time, in the simple search route IC, the information providing device 1 replaces the part for which no information has yet been provided and that is different from the new basic route Rr with the basic route Rr without changing the part for which information has already been provided to the driver. The part for which no information has yet been provided in the simple search route IC is, for example, the part that has not been displayed even once on the display of the vehicle side terminal 3. Specifically, the part that is the previous route of the position M3 of the vehicle M shown in Fig. 3 and is an outer part of D3 corresponds to the part for which no information has yet been provided.

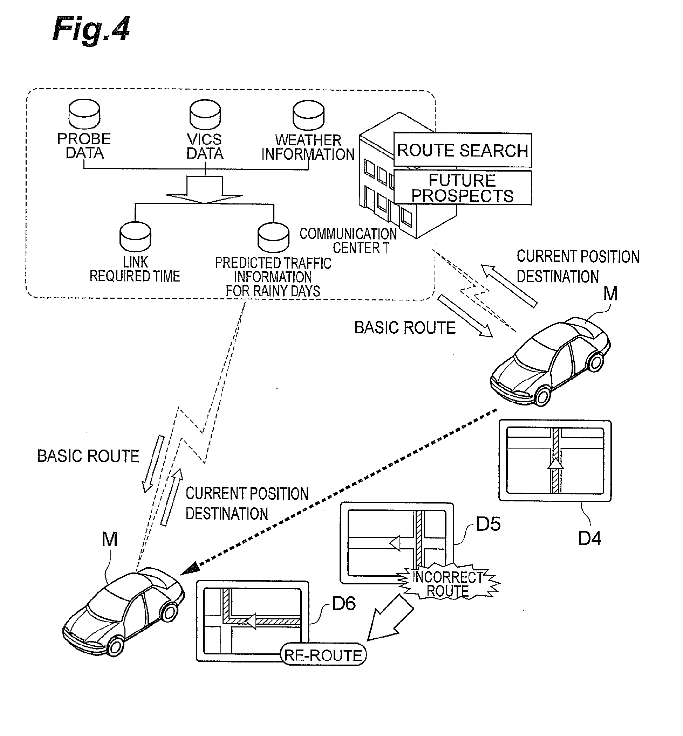

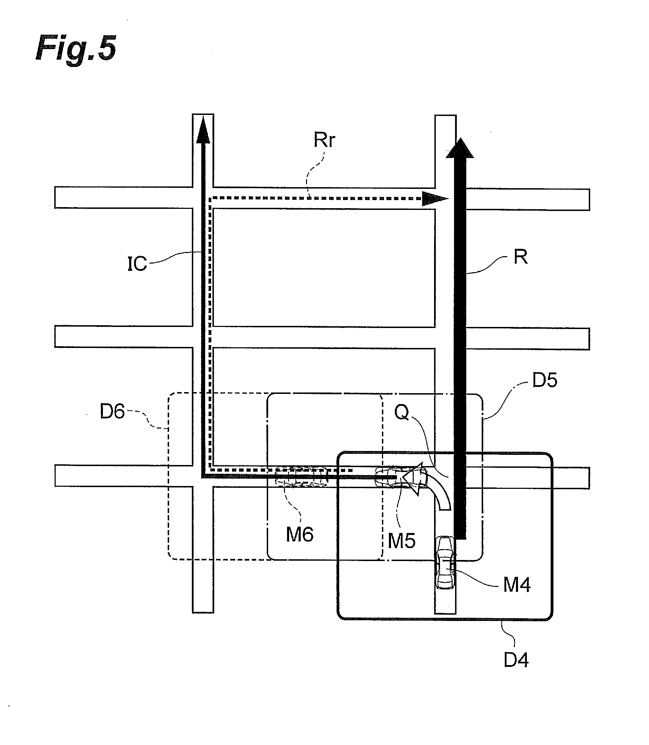

Here, a case where the vehicle M deviates from any one of the basic route R, the straight on deviation route IA, and the previous deviation route IB will be described referring to Figs. 4 and 5. M4 to M6 shown in Fig. 5 denote the positions of the vehicle M. M4 is the position of the vehicle M that is travelling on the basic route R. M5 is the position of the vehicle M that deviates from the basic route R at the intersection Q. The intersection Q is the intersection at which the vehicle M travels straight on the basic route R, and is not included to the travel direction change point P. M6 is the position of the vehicle M that is travelling on the simple search route IC. Further, D4 to D6 shown in Figs. 4 and 5 are the screen of the display of the vehicle side terminal 3 in M4 to M6.

In this case, even in a case where the vehicle M deviates from any one of the basic route R, the straight on deviation route IA, and the previous deviation route IB, the information providing device 1 searches for the simple search route IC in the vehicle side terminal 3, so that it does not take a longer communication time compared to a case where the communication center device performs the re-search, thus it is possible to provide information on the simple search route IC to the driver in a short time.

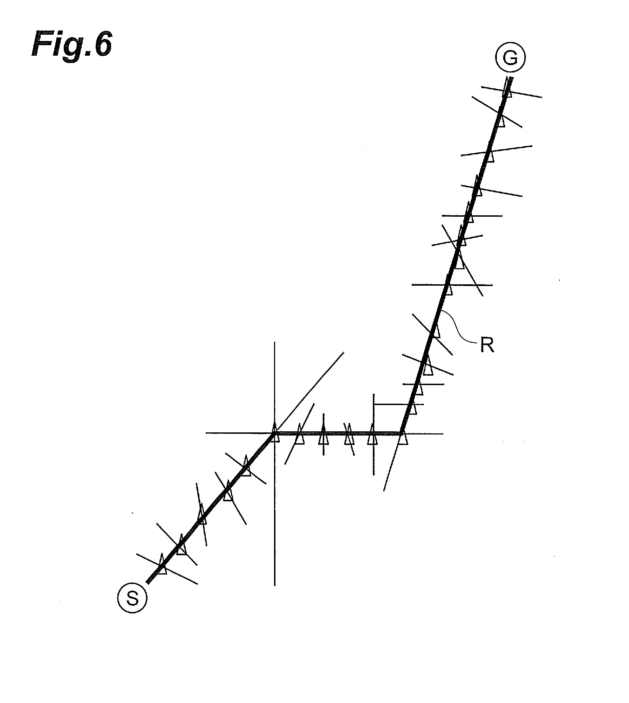

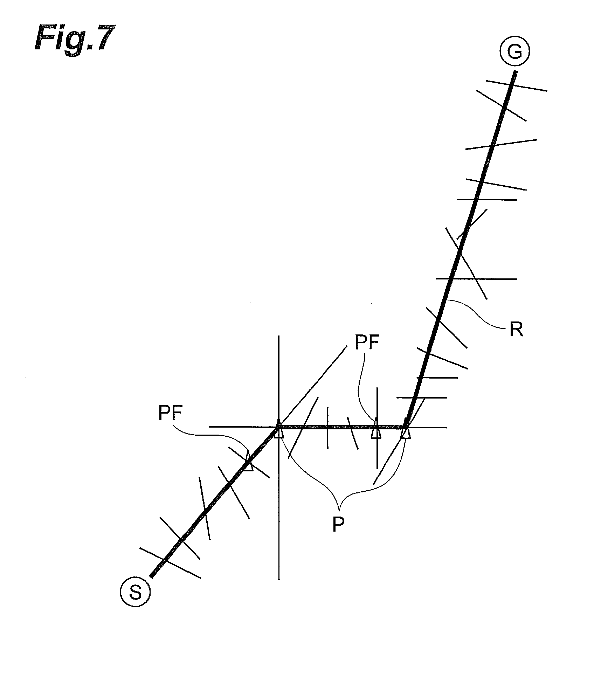

Further, since the information providing device 1 searches for the straight on deviation route IA and the previous deviation route IB as the deviation route, it does not take a longer calculation time and communication time compared to an apparatus in the related art which searches for the deviation route of all intersections and forks in the basic route R, thus it is possible to aim to shorten the waiting time of the driver. Fig. 6 is a schematic diagram illustrating the deviation route search of the communication center device in the information providing device in the related art. Fig. 7 is a schematic diagram illustrating the deviation route search of the communication center device 2 in the information providing device 1 relating to the embodiment. In Figs. 6 and 7, the current position of the vehicle M is denoted as S, and the destination is denoted as G. Further, the basic route R is denoted as a thick line and the road crossing with the basic route R is denoted as a thin line. The intersections at which the search for the deviation route is needed are denoted as triangular marks.

As shown in Fig. 6, in the information providing device in the related art, all intersections of 23 places that are present in the basic route R are the intersections at which the search for the deviation route is needed. On the other hand, as shown in Fig. 7, in the information providing device 1 relating to the present embodiment, 4 places including 2 places of the travel direction change points P and each immediately previous intersection PF to each travel direction change point P are intersections at which the search for the deviation route is needed. For this reason, in the information providing device 1, compared to the information providing device in the related art, significant reduction in the calculation time is achieved, reduction of the communication time is achieved due to the significant decrease in the communication amount, and the waiting time of the driver can be shortened. Further, the significant decrease in the communication amount enables lowering the communication cost incurred for transceiving data.

Hereinafter, a configuration of the information providing device 1 relating to the present embodiment will be described.

As shown in Fig. 1, the information providing device 1 includes the communication center device 2 installed in the communication center T, and the vehicle side terminal 3 installed in the vehicle M. The communication center device 2 and the vehicle side terminal 3 perform data communication through a wireless communication line.

The communication center device 2 includes a map database 4, an external information database 5, a basic route search unit 6, a travel direction change point determination unit 7, and a deviation route search unit 8. The map database 4 is the database which stores road information along which a vehicle travels, and map information.

The external information database 5 is the database which stores various traffic-related information collected in the communication center T from the outside. The traffic-related information includes probe data, VICS (Vehicle information and Communication System) data, and weather information.

The basic route search unit 6 searches for a basic route R based on the current position information of the vehicle M that is transmitted from the vehicle side terminal 3 and destination information. The search condition such as whether to use a toll road can be arbitrarily set by a driver. The basic route search unit 6 searches for the basic route R using road map information of the map database 4 and the traffic-related information of the external information database 5. Specifically, the basic route search unit 6 calculates a link required time that is a time required for passing through a predetermined section and future prospects information such as predicted traffic information for rainy days, based on the road map information and the traffic-related information (refer to Fig. 2). The basic route search unit 6 searches for the basic route R using the calculated future prospect information.

The travel direction change point determination unit 7 determines the travel direction change points P included in the basic route R that the basic route search unit 6 has searched for. In addition, the travel direction change points P are not limited to intersections or forks in roads in the basic route R, but includes plazas or parking lots which have exits in a plurality of directions, as long as they are places at which the vehicle M changes travel direction in the basic route R.

The deviation route search unit 8 searches for the deviation route that is set assuming a case where the vehicle M deviates from the basic route R, based on the travel direction change point P that the travel direction change point determination unit 7 determines. Specifically, the deviation route search unit 8 searches for the straight on deviation route IA to reach a destination or the basic route R in a case where the vehicle M passes straight on without changing the travel direction at the travel direction change point P. Further, the deviation route search unit 8 searches for the previous deviation route IB to reach the destination or the basic route R in a case where the vehicle M deviates from the basic route R at the immediately previous intersection or fork to the travel direction change point P.

The communication center device 2 transmits road map information of the vicinity of the current position of the vehicle M in the map database 4, the basic route R that the basic route search unit 6 has searched for, and the deviation route that the deviation route search unit 8 has searched for, to the vehicle side terminal 3.

The vehicle side terminal 3 includes a destination setting unit 9, a current position detection unit 10, a route deviation determination unit 11, a simple search unit 12, and an information providing unit 13.

The destination setting unit 9 includes an input terminal such as a touch panel which recognizes an operation input from the driver. The destination setting unit 9 performs setting of the destination of the vehicle M in response to the input of the driver. The current position detection unit 10 includes a GPS (Global Positioning System) for the purpose of position detection of the vehicle M. The current position detection unit 10 detects the current position of the vehicle M using the GPS. The vehicle side terminal 3 transmits the destination information of the destination setting unit 9 and the current position information of the current position detection unit 10 to the communication center device 2.

The route deviation determination unit 11 determines whether the vehicle M deviates from the basic route R, based on the basic route R that is transmitted from the communication center device 2, road map information of the vicinity of the vehicle M and the current position information of the current position detection unit 10. Further, the route deviation determination unit 11 determines whether the vehicle M deviates from any one of the basic route R, the straight on deviation route IA, and the previous deviation route IB, based on the basic route R that is transmitted from the communication center device 2, road map information of the vicinity of the vehicle M and the current position information of the current position detection unit 10. In a case where it is determined that the vehicle M deviates from any one of the basic route R, the straight on deviation route IA, and the previous deviation route IB, the vehicle side terminal 3 transmits a re-search request to the communication center device 2.

In a case where the route deviation determination unit 11 determines that the vehicle M deviates from any one of the basic route R, the straight on deviation route IA, and the previous deviation route IB, the simple search unit 12 searches for a simple search route IC from the current position of the vehicle M to the destination. The simple search unit 12 searches for the simple search route IC based on the road map information of the vicinity of the vehicle M and the current position information of the current position detection unit 10. The simple search unit 12 functions as the terminal side search unit in appended claims.

The information providing unit 13 provides information on a route to the driver. The information providing unit 13 includes a display unit 14, an information provided route memory unit 15, and a route replacement unit 16.

The display unit 14 includes a display and a speaker to provide information to an occupant of the vehicle M. As a display of the display unit 14, it is possible to employ a tablet type computer, a display of a smart phone, a HUD (Head Up Display), and the like, besides a vehicle fixed display for a car navigation. Since the display unit 14 includes the display, it is possible to visually provide easily understandable information to the occupant of the vehicle M, including the driver, through the display. The display unit 14 provides information to the driver through an image display by the display and an audio guide by the speaker.

The information providing unit 13 updates the content of information to be provided on the display unit 14 based on the current position information of the current position detection unit 10. Specifically, the information providing unit 13 updates the screen of the display unit 14 with the screen focused on the current position of the vehicle M each time the position of the vehicle M proceeds a predetermined distance. The information provided route memory unit 15 stores the portion that is provided with information by the display unit 14, in the simple search route IC.

In a case of receiving information on a new basic route Rr from the communication center device 2, the route replacement unit 16 compares the simple search route IC with the basic route Rr. The route replacement unit 16 determines whether or not in the simple search route IC, there is the part for which no information has yet been provided and that is different from the basic route Rr, based on the stored information in the information provided route memory unit 15. The route replacement unit 16 replaces the different part with the basic route Rr, in a case where it is determined that there is the different part. The display unit 14 provides information on the route that the route replacement unit 16 has replaced, to the driver.

Next, the sequence of the process in the information providing device 1 will be described.

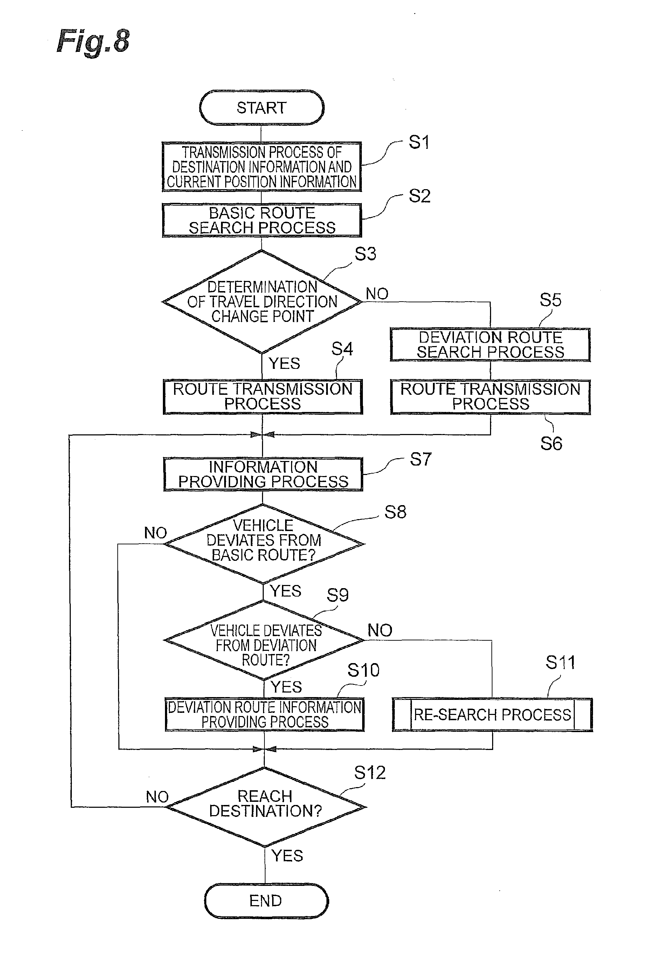

As shown in Fig. 8, the information providing device 1 performs a process to transmit destination information of the destination setting unit 9 and the current position information of the vehicle M that the current position detection unit 10 detects, from the vehicle side terminal 3 to the communication center device 2 (S1).

Thereafter, the basic route search unit 6 of the communication center device 2 performs a basic route search process to search for the basic route R, based on the destination information transmitted from the vehicle side terminal 3 and current position information of the vehicle M (S2). The basic route search unit 6 searches for the basic route R using road map information of the map database 4 and traffic-related information of the external information database 5.

Subsequently, the travel direction change point determination unit 7 determines the travel direction change point P included in the basic route R that the basic route search unit 6 has searched for (S3). In a case where the travel direction change point determination unit 7 cannot determine the travel direction change point P, the communication center device 2 performs a route transmission process to transmit the basic route R to the vehicle side terminal 3 (S4). Further, the case where the travel direction change point determination unit 7 cannot determine the travel direction change point P refers to the case where the change in the travel direction is not included in the basic route R and the vehicle is routed straight on the same road. At this time, the communication center device 2 also transmits road map information of the vicinity of the current position of the vehicle M to the vehicle side terminal 3.

On the other hand, in a case where it is determined that the travel direction change point determination unit 7 determines the travel direction change point P, the deviation route search unit 8 performs a deviation route search process to search for the straight on deviation route IA and the previous deviation route IB based on the travel direction change point P (S5). Thereafter, the communication center device 2 performs a route transmission process to transmit the basic route R, the straight on deviation route IA, and the previous deviation route IB to the vehicle side terminal 3 (S6). At this time, the communication center device 2 transmits the road map information of the vicinity of the current position of the vehicle M to the vehicle side terminal 3.

In the vehicle side terminal 3, the information providing unit 13 performs an information providing process to provide information on the basic route R transmitted from the communication center device 2 to the driver (S7). Next, the route deviation determination unit 11 determines whether the vehicle M deviates from the basic route R based on the basic route R transmitted from the communication center device 2, road map information of the vicinity of the vehicle M and current position information of the current position detection unit 10 (S8). The route deviation determination unit 11 proceeds to step S12 in a case where it is determined that the vehicle M does not deviate from the basic route R.

In a case where it is determined that the vehicle M deviates from the basic route R, the route deviation determination unit 11 determines whether the vehicle M also deviates from the straight on deviation route IA or the previous deviation route IB (S9). In a case where it is determined that the route deviation determination unit 11 determines that the vehicle M does not deviate from the straight on deviation route IA or the previous deviation route IB, the information providing unit 13 performs a deviation route information providing process to provide information on the deviation route to the driver along which the vehicle M is travelling (S10). Thereafter, the process proceeds to step S12.

In step S9, in a case where the route deviation determination unit 11 determines that the vehicle M deviates from the straight on deviation route IA and the previous deviation route IB, a re-search process is performed (S11). The re-search process of step S11 will be described later. Thereafter, the process proceeds to step S12.

In step S12, the vehicle side terminal 3 determines whether the vehicle M reaches the destination based on the destination information of the destination setting unit 9 and the current position information of the current position detection unit 10. In a case where it is determined that the vehicle M does not reach the destination, the vehicle side terminal 3 returns to the information providing process of S7, and provides information of new content according to the current position of the vehicle M. On the other hand, in a case where it is determined that the vehicle M reaches the destination, the vehicle side terminal 3 terminates the process of the information providing device 1.

Subsequently, the re-search process of step S11 of the information providing device 1 will be described.

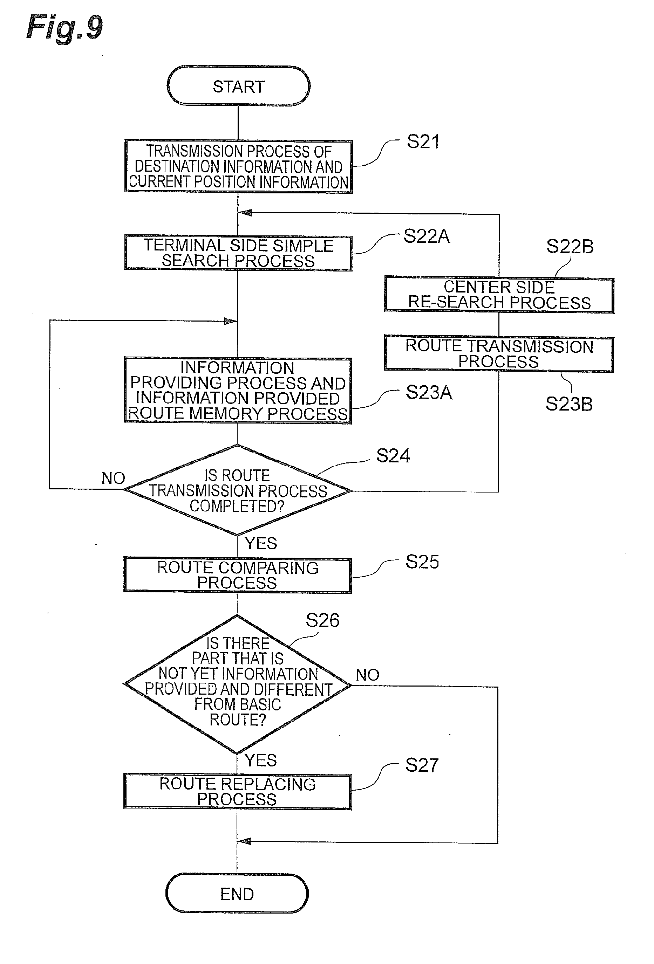

As shown in Fig. 9, the vehicle side terminal 3 firstly transmits a re-search request with respect to the communication center device 2 (S21). At this time, the vehicle side terminal 3 also transmits the destination information of the destination setting unit 9 and current position information of the current position detection unit 10 to the communication center device 2.

Thereafter, the vehicle side terminal 3 performs a terminal side simple search process to search for a simple search route IC from the current position of the vehicle M to the destination in the simple search unit 12 (S22A). The information providing unit 13 performs an information providing process and an information provided route memory process (S23A). The information providing process is the process to provide information on the simple search route IC to the driver by the display unit 14. Further, the information provided route memory process is the process to store the simple search route IC that is provided with information by the information provided route memory unit 15.

On the other hand, the communication center device 2 performs a center side re-search process to search for a new basic route Rr in response to the re-search request (S22B). In the center side re-search process, the straight on deviation route IA and the previous deviation route IB may be searched for corresponding to the basic route Rr beside the basic route Rr. Alternatively, an aspect in which the deviation route is not searched for to reduce a calculation time may be adopted. The communication center device 2 performs the route transmission process to transmit the basic route Rr to the vehicle side terminal 3 in a case where the re-search process is completed (S23B).

The vehicle side terminal 3 determines whether the route transmission process by the communication center device 2 is completed or not (S24). In a case where it is determined that the route transmission process is not completed, the vehicle side terminal 3 returns to step S23B and continues to provide information on the simple search route IC. In a case where it is determined that the route transmission process is completed, the vehicle side terminal 3 performs a route comparing process to compare the simple search route IC with the basic route Rr (S25).

Thereafter, the route replacement unit 16 of the vehicle side terminal 3 determines whether or not in the simple search route IC, there is a part that the information provided route memory unit 15 does not store and is different from the basic route Rr (S26). The route replacement unit 16 terminates the re-search process, in a case where it is determined that there is not the different part. On the other hand, the route replacement unit 16 performs a route replacing process to replace the different part with the basic route Rr, in a case where it is determined that there is the different part (S27). Thereafter, the route replacement unit 16 terminates the re-search process.

Next, the operational effect of the aforementioned information providing device 1 will be described.

According to the information providing device 1 relating to the present invention, the mobile object in advance searches for the straight on deviation route IA and the previous deviation route IB assuming a case where the vehicle M deviates from the basic route R, thereby providing information on the straight on deviation route IA and the previous deviation route IB in a short time and shortening the waiting time for re-routing, even in a case where the driver deviates by mistake from the basic route R. Further, in the information providing device 1, since the driver is likely to take an incorrect route in the vicinity of the travel direction change point P at which the travel direction needs to be changed in the basic route R, the information providing device searches for the deviation route based on the travel direction change point P, thereby avoiding searching for an extra deviation route. Therefore, according to the information providing device 1, it is possible to efficiently search for the deviation route, thus a reduction in communication time is achieved due to a reduction of search time and a decrease in the communication amount, and thus it is possible to shorten the waiting time of the driver.

Further, in the information providing device 1, since a situation where the driver deviates from the basic route R is likely to happen in a case where the driver travels straight on without changing the travel direction at the travel direction change point P or changes the travel direction at the immediately previous intersection or fork to the travel direction change point P, the information providing device in advance searches for the straight on deviation route IA and the previous deviation route IB, thereby suppressing a search time from being extended and shortening a waiting time for re-routing.

Further, in the information providing device 1, since the vehicle side terminal 3 performs a simple search in a case where the vehicle M deviates from any one of the basic route R, the straight on deviation route IA and the previous deviation route IB, it takes a shorter communication time compared to a case where a communication center device 2 re-searches, and thus it is possible to provide information on the simple search route IC to the driver in a short time, and shorten a waiting time for re-routing. Further, in the information providing device 1, along with simple search of the vehicle side terminal 3, the communication center device 2 performs a re-search. Then, after the communication center device 2 terminates the re-search, information on the basic route Rr of the communication center device 2, that is searched for more accurately by the simple search, is preferentially provided as information, so that it is possible to achieve an improvement in an accuracy of the information of the route to be provided. Therefore, according to the information providing device 1, it is possible to shorten the waiting time for re-routing and provide information on the route with high accuracy.

Further, in the simple search route IC, the information providing device 1 replaces the part for which no information has yet been provided and that is different from the basic route Rr with the basic route Rr, without changing the part in the simple search route IC for which information has already been provided to the driver. Therefore, according to the information providing device 1, the driver does not recognize the route replacement, so that it is possible to prevent the driver's attention from being diverted or from resulting in a loss of trust of the driver due to a sudden change in the route for which information is provided and that is displayed on screen. This contributes to ensuring the safety with respect to driving and the improvement in reliability of the device.

The present invention is not limited to the aforementioned embodiments.

For example, the mobile object to which the present invention can be applied is not limited to a vehicle. The present invention can be applied to a motorcycle, a bicycle, a personal mobility vehicle, and the like. Further, the deviation route is not limited to the straight on deviation route IA and the previous deviation route IB. An aspect may be adopted which in advance searches for a deviation route with respect to intersections or forks located within a predetermined distance from the travel direction change point P.

Further, the mobile object terminal in claims does not represent only the terminal that is fixed to the mobile object, but includes a smart phone, a tablet type computer, or the like that is informationally connected with the mobile object.

Further, the deviation route is not limited to a case including both the straight on deviation route and the previous deviation route, but may include only one thereof. Furthermore, the deviation route and the simple search route IC may not be the route to reach the destination. The deviation route and the simple search route IC may be a route to return to the basic route R when the vehicle deviates from the basic route R.

### Industrial Applicability

The present invention can be used in an information providing device which provides information on a route to a destination to a driver.

### Reference Signs List

1... Information providing device
2... Communication center device
3... Vehicle side terminal (mobile object terminal)
6... Basic route search unit
7... Travel direction change point determination unit
8... Deviation route search unit
12... Simple search unit (terminal side search unit)
13... Information providing unit
14... Display unit
15... Information provided route memory unit
16... Route replacement unit
D1 to D3... Display screen
IA... Straight on deviation route
IB... Previous deviation route
IC... Simple search route
M... Vehicle
M1 to M3... Position of vehicle
P... Travel direction change point
R... Basic route
Rr... New basic route
T... Communication center

## Claims

1. An information providing device which includes a mobile object terminal installed in a mobile object, a communication center device that searches for a basic route from a current position of the mobile object to a destination by communication with the mobile object terminal, and an information providing unit that provides information on the basic route to a driver of the mobile object,
wherein the communication center device includes
a travel direction change point determination unit that determines a travel direction change point at which a travel direction of the mobile object changes from the basic route, and
a deviation route search unit that searches for a deviation route that is set assuming a case where the mobile object deviates from the basic route, based on the travel direction change point, and
wherein the information providing unit provides information on the deviation route to the driver, in a case where the mobile object travels along the deviation route.

2. The information providing device according to claim 1,
wherein the deviation route search unit searches for as a deviation route, at least any one of a straight on deviation route that is set assuming a case where the mobile object travels straight on at the travel direction change point and a previous deviation route that is set assuming a case where the mobile object deviates from the basic route at the immediately previous intersection or fork to the travel direction change point.

3. The information providing device according to claim 1 or 2,
wherein the mobile object terminal has a terminal side search unit that searches for a route from a current position of the mobile object to the destination, in a case where the mobile object deviates from any one of the basic route and the deviation route, and
wherein in a case where the terminal side search unit searches for a route, the information providing unit provides information on the route to the driver.

4. The information providing device according to claim 3,
wherein the communication center device re-searches for a basic route from the current position of the mobile object to the destination by communication with the mobile object terminal, in a case where the mobile object deviates from any one of the basic route and the deviation route, and
wherein in a case where the communication center device completes re-searching, in a route that the terminal side search unit searches for, the information providing unit replaces a part that is different from the basic route that the communication center device re-searches for with the basic route, and provides information on a replaced route to the driver.

5. The information providing device according to claim 4,
wherein in the case where the communication center device completes re-searching, in the route that the terminal side search unit searches for, the information providing unit replaces a part that is not yet information provided and different from the basic route that the communication center device re-searches for with the basic route, and provides information on a replaced route to the driver.

6. The information providing device according to any one of claims 1 to 5,
wherein the information providing unit includes a display that provides information to an occupant of the mobile object.
